# EUROPEAN PATENT APPLICATION

(11) **EP 4 207 416 A1**
(43) Date of publication of application: **05.07.2023**
(21) Application number: 21946776.8
(22) Date of filing: 04.11.2021
(51) Int. Cl.: H01M 10/0525, H01M 10/615, H01M 10/637, H01M 10/654, H01M 10/6571, H01M 4/66

(54) **ELECTROCHEMICAL APPARATUS AND ELECTRIC DEVICE COMPRISING SAME**

(30) Priority: 22.06.2021 CN 202110694180
(71) Applicant: Ningde Amperex Technology Limited, Ningde City, Fujian Province 352100 (CN)
(72) Inventor: ZHANG, Yibo, Ningde City, Fujian Province 352100 (CN); WEI, Hongmei, Ningde City, Fujian Province 352100 (CN)
(74) Representative: Icosa
(86) International application number: PCT/CN2021/128780
(87) International publication number: WO 2022/267294

(57) **Abstract**

This application provides an electrochemical apparatus and an electric device, where the electrochemical apparatus includes a first electrode plate, a first terminal, and a second terminal. The first electrode plate includes a composite current collector, and the composite current collector includes a base layer, a first conductive layer, and a second conductive layer, where the first conductive layer includes a first zone and a second zone, and the first terminal and the second terminal are electrically connected to the first zone. In the electrochemical apparatus and the electric device provided in this application, a heating zone is provided on the composite current collector to connect a heating circuit, a method to introduce a heating structure is optimized, thereby effectively alleviating many problems caused by existing heating methods.

## Description

This application claims priority of the Chinese Patent Application No. 202110694180.8 filed on June 22, 2021.

### TECHNICAL FIELD

This application relates to the field of battery technologies, and particularly to an electrochemical apparatus and an electric device including the same.

### BACKGROUND

It is well known that use of lithium-ion batteries is greatly affected by temperature. Generally, in a low-temperature environment, the batteries suffer from degradation of charging capability, their capacities cannot be fully utilized, electron conductivity and ion conductivity are reduced, and kinetic performance drops dramatically. This causes the lithium-ion batteries to undergo lithium precipitation during high-rate charging, which deteriorates the battery's interface and results in safety risks. In addition, in a low-temperature environment, extractable capacity of battery active materials is reduced, and the voltage platform is reduced, resulting in a loss of battery's energy density.

Existing methods for improving the low-temperature performance of lithium-ion batteries mainly include heating the battery, and the commonly used heating schemes include external heating and internal heating. In external heating, battery performance in low temperature is improved by adding a heating apparatus outside a battery or battery module. Such a solution has low heating efficiency and limited improvement. During the heating, temperature differences between various parts of the battery are large, which has a greater impact on electrode materials, resulting in deterioration of battery's cycle performance and safety risks. In internal heating, battery temperature increase is achieved by embedding heating sheets inside the battery to heat the battery inside, improving battery's kinetics, and further improving charge and discharge capabilities of the battery in a low-temperature environment. During the internal heating, the heating rate is fast and the temperature differences between the parts of the battery are small, which can realize rapid heating of the battery while causing less damage to the battery.

However, the embedding of the heating sheets may cause some problems, for example, the heating sheets occupy a given space, which affects energy density of the battery; the heating sheets deteriorates interface contact inside the battery, which causes problems such as accelerated cycle attenuation and local lithium precipitation; corners of the heating sheets may penetrate a separator, causing serious self-discharge problems; and the heating sheets are not firmly fixed to battery body so that they are prone to fall off when the battery is dropped, then causing battery failure or the like.

### SUMMARY

In view of this, this application is intended to provide an electrochemical apparatus with a self-heating function and an electric device, to resolve at least one of the problems in the foregoing internal heating.

According to a first aspect of this application, an electrochemical apparatus is provided, including a first electrode plate, a first terminal, and a second terminal; the first electrode plate includes a composite current collector; and the composite current collector includes: a base layer, where the base layer has a first surface and a second surface that are opposite to each other; a first conductive layer, where the first conductive layer is disposed on the first surface; and a second conductive layer, where the second conductive layer is disposed on the second surface, where the first conductive layer includes a first zone and a second zone, and the first terminal and the second terminal are electrically connected to the first zone. The first zone serves as a heating zone configured to heat the electrochemical apparatus.

In some embodiments, a first resistance R1 is provided between the first terminal and the second terminal, satisfying R1≥5 m. Further, R1≥20 mΩ.

In some embodiments, the electrochemical apparatus further includes a positive tab and a negative tab, and an internal resistance R is provided between the positive tab and the negative tab, satisfying 0.05≤R1/R≤5000. Further, 1≤R1/R≤1000.

When a temperature of the electrochemical apparatus is lower than a normal operating temperature (for example, lower than about 5°C), the first terminal and the second terminal will be connected to a heating circuit and heat the electrochemical apparatus. Because the resistance R1 is much greater than the internal resistance of the electrochemical apparatus in normal operation, and a current of the heating circuit can be conveniently increased during charging, the internal temperature of the electrochemical apparatus may rise rapidly, so that electrochemical performance of the electrochemical apparatus can be quickly improved.

In some embodiments, the first zone is formed integrally by extending from the second zone.

In some embodiments, the first zone is located at an end of the composite current collector in a length direction.

In some embodiments, the first zone includes a pattern.

In some embodiments, the second conductive layer includes a third zone and a fourth zone, the electrochemical apparatus further includes a third terminal and a fourth terminal, the third terminal and the fourth terminal are electrically connected to the third zone, and a second resistance R2 is provided between the third terminal and the fourth terminal, satisfying R2≥5 mQ. Further, R2≥20 mQ. The third zone serves as a heating zone configured to heat the electrochemical apparatus.

In some embodiments, the third zone is formed integrally by extending from the fourth zone.

In some embodiments, the third zone is located at an end of the composite current collector in a length direction.

In some embodiments, the third zone includes a pattern.

In some embodiments, materials of the first zone, the second zone, the third zone, or the fourth zone each independently include at least one of nickel, titanium, copper, silver, gold, platinum, iron, cobalt, chromium, tungsten, molybdenum, aluminum, magnesium, potassium, sodium, calcium, strontium, barium, silicon, germanium, antimony, lead, indium, or zinc.

In some embodiments, a porosity of the first conductive layer ranges from 0% to 60%, and a porosity of the second conductive layer ranges from 0% to 60%.

In some embodiments, a thickness of the first conductive layer ranges from 0.1 µm to 10 µm, and a thickness of the second conductive layer ranges from 0.1 µm to 10 µm.

In some embodiments, a material of the base layer includes a polymer. In some embodiments, the polymer includes an insulative polymer. In some embodiments, the insulative polymer includes at least one of polyethylene terephthalate, polybutylene terephthalate, polyethylene naphthalate, polyether-ether-ketone, polyimide, polyamide, polyethylene glycol, polyamideimide, polycarbonate, cyclic polyolefin, polyphenylene sulfide, polyvinyl acetate, polytetrafluoroethylene, polymethylene naphthalene, polyvinylidene fluoride, polypropylene carbonate, poly(vinylidene fluoride-hexafluoropropylene), poly(vinylidene fluoride-co-chlorotrifluoroethylene), silicone, vinylon, polypropylene, polyethylene, polyvinyl chloride, polystyrene, polyether nitrile, polyurethane, polyphenylene ether, polysulfone, and their derivatives.

In some embodiments, a porosity of the base layer ranges from 0% to 50%.

In some embodiments, a thickness of the base layer ranges from 1 µm to 20 µm.

In some embodiments, the first electrode plate further includes a first active material layer, and the first active material layer is disposed on a surface of the second zone.

In some embodiments, the first electrode plate further includes a second active material layer, and the second active material layer is disposed on a surface of the fourth zone.

In some embodiments, a bonding layer is provided between the base layer and the first conductive layer, and the bonding layer includes a binder.

In some embodiments, a bonding layer is provided between the base layer and the second conductive layer, and the bonding layer includes a binder.

In some embodiments, the binder includes at least one of polyamide, polyurethane, ethylene-vinyl acetate copolymer, ethylene-vinyl alcohol copolymer, acrylic acid ester polymer, sodium alginate, polyacrylic acid, polyvinyl alcohol, carboxymethyl chitosan, gelatin, polyvinylidene fluoride-hexafluoropropylene, polyvinylidene fluoride, polyacrylonitrile, polyphenylene ether, polypropylene carbonate, polyethylene oxide, silicone resin, ethylene acrylic acid copolymer, and their derivatives.

In some embodiments, the bonding layer further includes a conductive agent. The conductive agent includes at least one of carbon nanotubes, conductive carbon, or graphene.

This application further provides an electric device, including the electrochemical apparatus according to any one of the foregoing embodiments.

In some embodiments, the electric device further includes a switch. The switch closes when a temperature of the electrochemical apparatus is lower than T1, so that a current passes through the first zone to heat the electrochemical apparatus.

In some embodiments, the electric device further includes a switch. The switch closes when a temperature of the electrochemical apparatus is lower than T1, so that a current passes through the third zone to heat the electrochemical apparatus.

In some embodiments, T1≤5°C.

In the electrochemical apparatus and the electric device provided in this application, a heating zone is provided on the composite current collector to connect a heating circuit, the self-heating function of the electrochemical apparatus is realized, and a method to introduce a heating structure is optimized, thereby effectively alleviating problems caused by existing heating methods, such as energy density reduction, interface contact deterioration, serious self-discharge, and reliability risks in drop tests.

### BRIEF DESCRIPTION OF DRAWINGS

The following further describes this application in detail with reference to the accompanying drawings and specific embodiments.
FIG. 1 is a schematic structural diagram of an electrochemical apparatus according to an embodiment of this application.
FIG. 2 is a schematic structural diagram of a composite current collector according to an embodiment of this application.
FIG. 3 is a schematic structural diagram of a first conductive layer according to an embodiment of this application.
FIG. 4 is a schematic structural diagram of a first conductive layer according to an embodiment of this application.
FIG. 5 is a schematic structural diagram of a first conductive layer according to an embodiment of this application.
FIG. 6 is a schematic structural diagram of a second conductive layer according to an embodiment of this application.
FIG. 7 is a schematic structural diagram of a second conductive layer according to an embodiment of this application.
FIG. 8 is a schematic structural diagram of a second conductive layer according to an embodiment of this application.
FIG. 9 is a schematic structural diagram of a first conductive layer and a second conductive layer according to an embodiment of this application.

Reference signs of main components:

| | |
|---|---|
| Electrochemical apparatus | 100 |
| First electrode plate | 10 |
| Second electrode plate | 20 |
| First terminal | 30 |
| Separator | 40 |
| Second terminal | 50 |
| First tab | 60 |
| Third terminal | 70 |
| Second tab | 80 |
| Fourth terminal | 90 |
| Third tab | 91 |
| Composite current collector | 101 |
| First surface | 102 |
| Base layer | 103 |
| Second surface | 104 |
| First conductive layer | 105 |
| First active material layer | 106 |
| Second conductive layer | 107 |
| Second active material layer | 108 |
| First zone | 1051 |
| Second zone | 1052 |
| Third zone | 1071 |
| Fourth zone | 1072 |

Embodiments of this application will be further described with reference to the accompanying drawings in the following specific embodiments.

### DETAILED DESCRIPTION OF EMBODIMENTS

Unless otherwise defined, all technical and scientific terms used herein shall have the same meanings as commonly understood by those skilled in the art to which embodiments of this application belong. The terms used in this specification are merely intended to describe specific embodiments but not intended to constitute any limitation on the embodiments of this application.

Spatial related terms such as "above" may be used herein for ease of description to describe the relationship between one element or feature and another element (a plurality of elements) or feature (a plurality of features) as illustrated in the figure. It should be understood that in addition to the directions described in the figures, the spatial related terms are intended to include different directions in the use or operation of devices or apparatuses. For example, if a device in the figure is turned over, an element described as "on" or "above" another element or feature should be oriented "below" or "under" the another element or feature. Therefore, the example term "above" may include directions of above and below.

It should be understood that although the terms first, second, third, or the like may be used herein to describe various elements, components, zones, layers, and/or portions, these elements, components, zones, layers, and/or portions should not be limited by these terms. These terms are used to distinguish one element, component, zone, layer, or portion from another element, component, zone, layer, or portion. Therefore, the first element, component, zone, layer, or portion discussed below may be referred to as the second element, component, zone, layer, or portion without departing from the teachings of the example embodiments.

Some embodiments of this application are described in detail below. In absence of conflicts, the following embodiments and features in the embodiments can be combined.

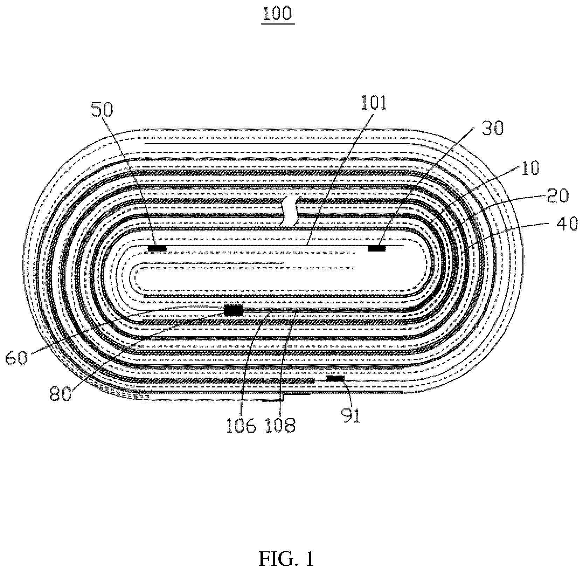

Referring to FIG. 1, this application provides an electrochemical apparatus 100. The electrochemical apparatus 100 includes a first electrode plate 10, a first terminal 30, and a second terminal 50, and the first electrode plate 10 includes a composite current collector 101. The electrochemical apparatus 100 shown in FIG. 1 is formed by winding the first electrode plate 10 and other electrode assemblies. It can be understood that the electrochemical apparatus 100 may alternatively be produced by stacking the first electrode plate 10 and other electrode assemblies. The other electrode assemblies include a second electrode plate 20 and a separator 40, and the separator 40 is disposed between the first electrode plate 10 and the second electrode plate 20.

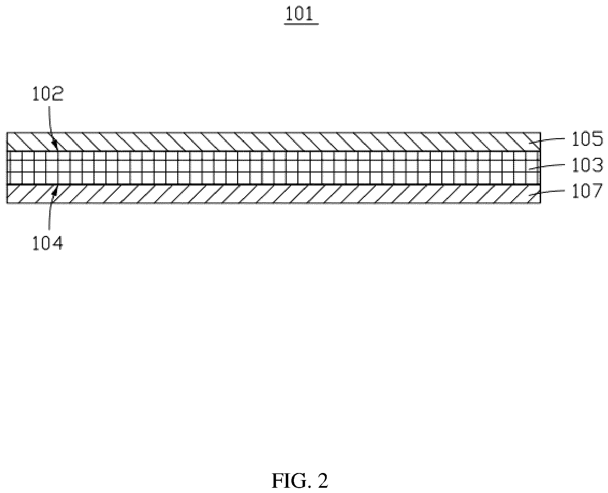

Referring to FIG. 2, the composite current collector 101 includes a base layer 103, a first conductive layer 105, and a second conductive layer 107, where the base layer 103 has a first surface 102 and a second surface 104 that are opposite to each other, the first conductive layer 105 is disposed on the first surface 102, and the second conductive layer 107 is disposed on the second surface 104. The first conductive layer 105 and the second conductive layer 107 may be formed on the surfaces of the base layer 103 by using a sputtering method, a vacuum deposition method, an ion plating method, a laser pulse deposition method, or the like. The first conductive layer 105 and the second conductive layer 107 are metal plating layers, materials of the metal plating layers on both sides of the base layer 103 may be the same or different, for example, copper on both sides, or copper on one side, aluminum on the other side, and preferably the materials of the metal plating layers on both sides are the same.

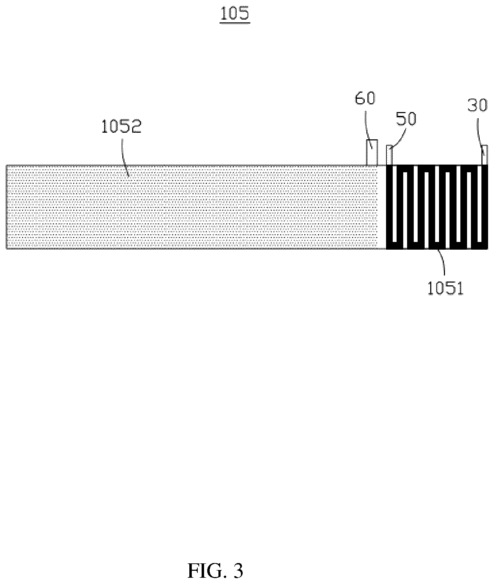

Referring to FIG. 3, the first conductive layer 105 includes a first zone 1051 and a second zone 1052. A first tab 60 is connected to the second zone 1052. Along a length direction of the first zone 1051, the first terminal 30 is electrically connected to one end of the first zone 1051, and the second terminal 50 is electrically connected to the other end of the first zone 1051. A first resistance R1 is provided between the first terminal 30 and the second terminal 50, satisfying R1≥5 mΩ. Further, R1≥20 mQ. The first zone 1051 serves as a heating zone configured to heat the electrochemical apparatus 100, and the second zone 1052 serves as a coated zone configured to provide an active material layer.

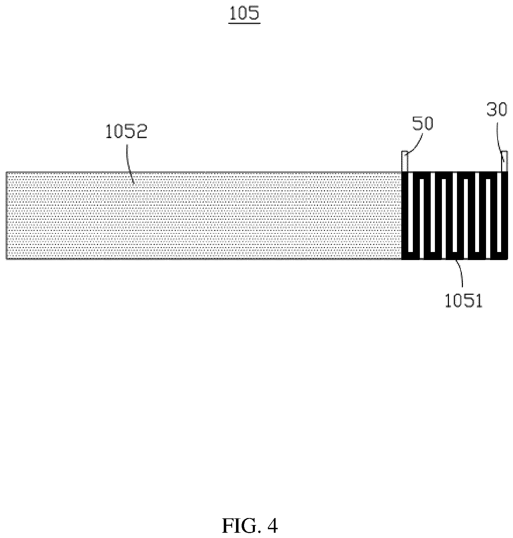

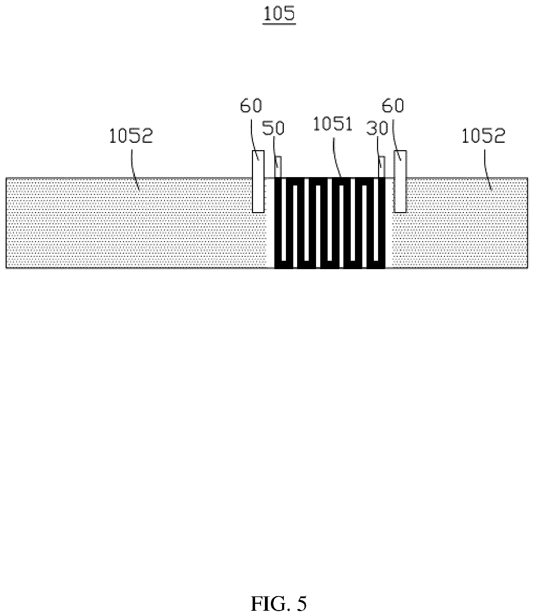

As shown in FIG. 3, the first zone 1051 and the second zone 1052 may be disposed separately. As shown in FIG. 4, the first zone 1051 may alternatively be formed integrally by extending from one end of the second zone 1052. In this case, there is no need to provide the first tab 60 to connect to the second zone 1052. In FIG. 3 and FIG. 4, the first zone 1051 is located at an end of the composite current collector 101 in a length direction. It can be understood that the first zone 1051 alternatively may be approximately located in the middle of the composite current collector 101 in the length direction. As shown in FIG. 5, the first zone 1051 divides the second zone 1052 into two separated parts. The location of the first zone 1051 may be adjusted according to the structural design of the electrochemical apparatus. For example, the first zone 1051 may be located at a vacancy foil zone (a composite current collector uncoated with the active material layer) in the innermost circle of the first electrode plate 10 in the wound type electrode assembly shown in FIG. 1, or may be located at a vacancy foil zone in the outermost circle of the first electrode plate 10 of the wound type electrode assembly; and in the laminated type electrode assembly, the first zone 1051 may be located at an outermost single side zone of the electrode plate, or may be located in a layer of the electrode plate.

As shown in FIG. 3 to FIG. 5, the first zone 1051 includes a pattern. The shape of the pattern includes, but is not limited to, a wave shape, a zigzag shape, or the like. It can be understood that the first conductive layer 105 is a metal plating layer, and part of the metal plating layer of the first conductive layer 105 can be removed by using a method such as etching, so that the remaining metal plating layer forms a specific pattern (such as a wave shape, a zigzag shape). The pattern makes an electron transmission path longer and the resistance increase, that is, forming the first zone 1051.

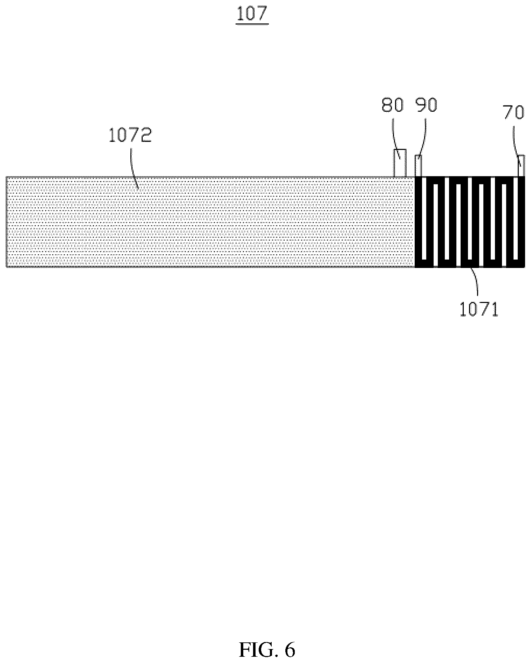

Referring to FIG. 6, the second conductive layer 107 includes a third zone 1071 and a fourth zone 1072, and a second tab 80 is connected to the fourth zone 1072. The electrochemical apparatus further includes a third terminal 70 and a fourth terminal 90. Along a length direction of the third zone 1071, the third terminal 70 is electrically connected to one end of the third zone 1071, and the fourth terminal 90 is electrically connected to the other end of the third zone 1071. A second resistance R2 is provided between the third terminal 70 and the fourth terminal 90, satisfying R2≥5 mQ. Further, R2≥20 mQ. The third zone 1071 serves as a heating zone configured to heat the electrochemical apparatus 100, and the fourth zone 1072 serves as a coated zone configured to provide an active material layer.

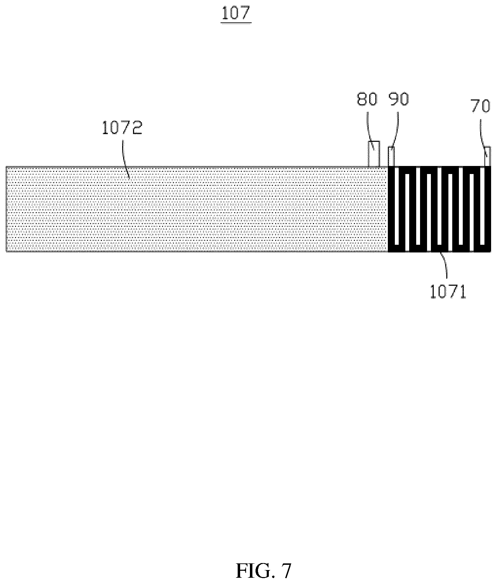

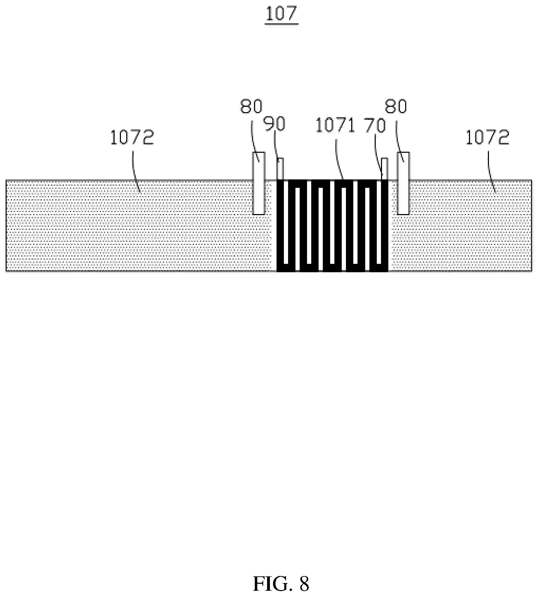

As shown in FIG. 6, the third zone 1071 and the fourth zone 1072 may be disposed separately. As shown in FIG. 7, the third zone 1071 may alternatively be formed integrally by extending from one end of the fourth zone 1072. In this case, there is no need to provide the second tab 80 to connect to the fourth zone 1072. In FIG. 6 and FIG. 7, the third zone 1071 is located at an end of the composite current collector 101 in a length direction. It can be understood that the third zone 1071 alternatively may be approximately located in the middle of the composite current collector 101 in the length direction. As shown in FIG. 8, the third zone 1071 divides the fourth zone 1072 into two separated parts.

As shown in FIG. 6 to FIG. 8, the third zone 1071 includes a pattern. The shape of the pattern includes, but is not limited to, a wave shape, a zigzag shape, or the like. It can be understood that the second conductive layer 107 is a metal plating layer, and part of the metal plating layer of the second conductive layer 107 can be removed by a method such as etching, so that the remaining metal plating layer forms a specific pattern (such as a wave shape, a zigzag shape). The pattern makes an electron transmission path longer and the resistance increase, that is, forming the third zone 1071.

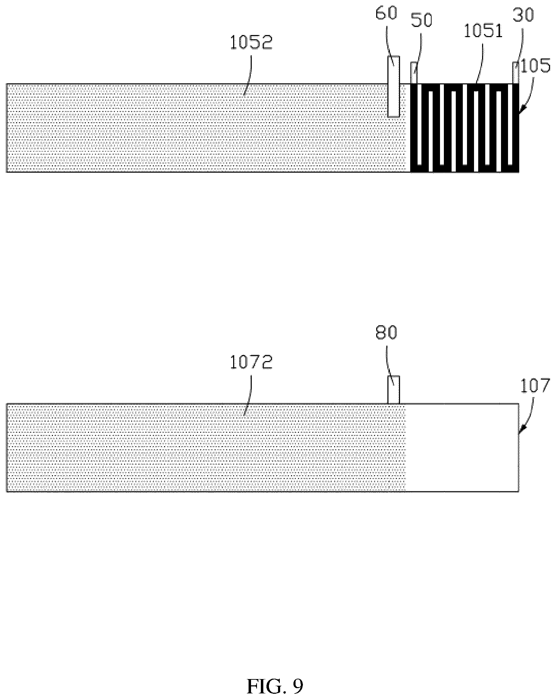

The projections of the first zone 1051 and the third zone 1071 in the thickness direction of the composite current collector 101 may be completely overlapped, partially overlapped, or not overlapped at all. It can be understood that the second conductive layer 107 may only include the fourth zone 1072 but not the third zone 1071. In this case, the metal layer on the second conductive layer 107 corresponding to the first zone 1051 may be removed, as shown in FIG. 9.

In some embodiments, materials of the first zone 1051, the second zone 1052, the third zone 1071, or the fourth zone 1072 each independently include at least one of nickel (Ni), titanium (Ti), copper (Cu), silver (Ag), gold (Au), platinum (Pt), iron (Fe), cobalt (Co), chromium (Cr), tungsten (W), molybdenum (Mo), aluminum (Al), magnesium (Mg), potassium (K), sodium (Na), calcium (Ca), strontium (Sr), barium (Ba), silicon (Si), germanium (Ge), antimony (Sb), lead (Pb), indium (In), or zinc (Zn).

In some embodiments, a porosity of the first conductive layer 105 ranges from 0% to 60%, and a porosity of the second conductive layer 107 ranges from 0% to 60%. The first conductive layer 105 and the second conductive layer 107 each have a porosity, which helps reduce weight and increase a loading amount of the active material. However, too large porosity causes too many pores in the first conductive layer 105 and the second conductive layer 107, which lengthens a transmission path of internal electrons along the first conductive layer 105 or the second conductive layer 107, and reduces the electron conductivity, affecting electrical properties of the electrochemical apparatus.

In some embodiments, a thickness of the first conductive layer 105 ranges from 0.1 µm to 10 µm, and a thickness of the second conductive layer 107 ranges from 0.1 µm to 10 µm. The thickness of the first conductive layer 105 or the second conductive layer 107 being within the foregoing ranges helps ensure that the first conductive layer 105 or the second conductive layer 107 has high electron conductivity and ensure the electrochemical performance, while ensuring that the electrochemical apparatus has a high energy density.

In some embodiments, a material of the base layer 103 includes a polymer. The polymer includes an insulative polymer. The insulative polymer includes at least one of polyethylene terephthalate, polybutylene terephthalate, polyethylene naphthalate, polyether-ether-ketone, polyimide, polyamide, polyethylene glycol, polyamideimide, polycarbonate, cyclic polyolefin, polyphenylene sulfide, polyvinyl acetate, polytetrafluoroethylene, polymethylene naphthalene, polyvinylidene fluoride, polypropylene carbonate, poly(vinylidene fluoride-hexafluoropropylene), poly(vinylidene fluoride-co-chlorotrifluoroethylene), silicone, vinylon, polypropylene, polyethylene, polyvinyl chloride, polystyrene, polyether nitrile, polyurethane, polyphenylene ether, polysulfone, and their derivatives.

In some embodiments, a porosity of the base layer 103 ranges from 0% to 50%. The base layer 103 has a porosity, which helps reduce weight and increase a loading amount of the active material, and increases a surface area of the composite current collector 101 to improve the electron transmission path. The principle of increasing the surface area to improve the electron transmission path is: with a larger porosity, a larger surface area of the base layer 103 may be covered by a metal layer when the first conductive layer 105 or the second conductive layer 107 is being prepared, that is, inner walls of pores close to the surface may also be vapor-deposited with a layer of metal, which become part of the first conductive layer 105 or the second conductive layer 107 in a practical sense.

In some embodiments, a thickness of the base layer 103 ranges from 1 µm to 20 µm. The thickness of the base layer 103 being within the foregoing range helps ensure that the base layer 103 has a high mechanical strength, and that the first conductive layer 105 and the second conductive layer 107 on two sides of the base layer 103 are not connected to each other to cause failure, while ensuring that the electrochemical apparatus has a high energy density.

Still referring to FIG. 1, the first electrode plate 10 further includes a first active material layer 106, and the first active material layer 106 is disposed on a surface of the second zone. The first electrode plate 10 further includes a second active material layer 108, and the second active material layer 108 is disposed on a surface of the fourth zone. The first active material layer 106 and the second active material layer 108 are active material layers that have a same polarity, for example, both are positive electrode active material layers. The electrochemical apparatus 100 further includes a third tab 91, and the third tab 91 is configured to lead out electricity of the second electrode plate 20. The third tab 91 may be a positive tab or a negative tab. In an embodiment, the second electrode plate 20 is a negative electrode plate, and the third tab 91 is a negative tab.

Still referring to FIG. 1, the first active material layer 106 and the second active material layer 108 are active material layers that have different polarities, for example, the first active material layer 106 is a negative electrode active material layer, and the second active material layer 108 is a positive electrode active material layer.

In some embodiments, a bonding layer is provided between the base layer 103 and the first conductive layer 105. In some embodiments, a bonding layer is provided between the base layer 103 and the second conductive layer 107. It can be understood that a bonding layer may be provided on each of two sides of the base layer 103, or on only one of the two sides. The bonding layer is configured to improve interface bonding force between the base layer 103 and the first conductive layer 105 and between the base layer 103 and the second conductive layer 107, and improve reliability of the composite current collector 101.

Further, the bonding layer includes a binder. The binder includes at least one of polyamide (PA), polyurethane (PU), ethylene-vinyl acetate copolymer (EVA), ethylene-vinyl alcohol copolymer (EVOH), acrylic polymer, sodium alginate (SA)), polyacrylic acid (PAA), polyvinyl alcohol (PVA), carboxymethyl chitosan (CMCS), gelatin, polyvinylidene fluoride-hexafluoropropylene (PVDF-HFP), polyvinylidene fluoride (PVDF), polyacrylonitrile (PAN), polyphenylene ether (PPO), polypropylene carbonate (PPC), polyethylene oxide (PEO), silicone resin, ethylene acrylic acid copolymer (EAA), and their derivatives. Materials of the bonding layers on two sides of the base layer 103 may be the same or different.

Further, the bonding layer further includes a conductive agent. The conductive agent includes at least one of carbon nanotubes, conductive carbon, or graphene. Addition of the conductive agent may further increase an electron conduction path and improve the electrical properties.

This application further provides an electric device, including the electrochemical apparatus according to any one of the foregoing embodiments.

Further, the electric device further includes a switch, which satisfies at least one of the following conditions:
(1) the switch closes when a temperature of the electrochemical apparatus is lower than T1, so that a current passes through the first zone to heat the electrochemical apparatus; and
(2) the switch closes when a temperature of the electrochemical apparatus is lower than T1, so that a current passes through the third zone to heat the electrochemical apparatus.

When a temperature of the electrochemical apparatus is lower than a normal operating temperature (for example, lower than about 5°C), the first terminal 30 and the second terminal 50 will be connected to a heating circuit, and/or the third terminal 70 and the fourth terminal 90 will be connected to a heating circuit. Because the resistances R1 and R2 are much greater than the internal resistance of the electrochemical apparatus in normal operation, generated heat is positively correlated with the resistance, and a current of the heating circuit can be conveniently increased during charging, the internal temperature of the electrochemical apparatus may rise rapidly, so that electrochemical performance of the electrochemical apparatus can be quickly improved.

Specific examples and comparative examples below are used to describe this application.

### Example 1

Preparation of a composite current collector: On surfaces of a 10 µm thick polyethylene terephthalate (PET) film, a 0.3 µm thick metal Al plating layer was prepared respectively on two sides by a vacuum deposition method as a first conductive layer and a second conductive layer. At an end of the composite current collector in a length direction, a pattern shown in FIG. 3 was etched on the first conductive layer through acidic corrosion liquid reaction as a first zone, where a resistance R1 between a first terminal and a second terminal that were connected to the first zone was 1.14 Ω.

Preparation of a positive electrode plate: Lithium cobalt oxide (LiCoO₂) as a positive electrode active material, conductive carbon black (Super P), and polyvinylidene fluoride (PVDF) were mixed in a weight ratio of 97.5:1.0:1.5, and N-methylpyrrolidone (NMP) was added to prepare a slurry with a solid content of 0.75, and the slurry was well stirred. The slurry was applied evenly on a surface of a coated zone of the metal Al plating layer on one side of the composite current collector, and dried at 90°C, so that single side coating of the positive electrode plate was completed. Subsequently, the above process was repeated, and the slurry was applied on the other side of the composite current collector and dried. After the above process was completed, active substance layers of the electrode plate were cold pressed to a compacted density of 4.0 g/cm³. Then, auxiliary processes such as tab welding and tape sticking were carried out to complete the preparation of the positive electrode plate.

Preparation of a negative electrode plate: Graphite as a negative electrode active material, conductive carbon black (Super P), and styrene-butadiene rubber (SBR) were mixed in a weight ratio of 96:1.5:2.5, and deionized water was added to prepare a slurry with a solid content of 0.7, and the slurry was well stirred. The slurry was applied evenly on one side of a metal Cu current collector, and dried at 110°C, so that single side coating of the negative electrode plate was completed. Subsequently, the above process was repeated, and the slurry was applied on a surface of the other side of the metal Cu current collector and dried. After the above process was completed, active substance layers of the electrode plate were cold pressed to a compacted density of 1.7 g/cm³. Then, auxiliary processes such as tab welding and tape sticking were carried out to complete the preparation of the negative electrode plate.

Preparation of an electrolyte: In an atmosphere of dry argon, first, organic solvent ethylene carbonate (EC), ethyl methyl carbonate (EMC), and diethyl carbonate (DEC) were mixed in a mass ratio of EC:EMC:DEC = 30:50:20, and then lithium hexafluorophosphate (LiPF₆) was added to the organic solvent for dissolution and mixed evenly, to obtain an electrolyte with a lithium salt concentration of 1.15 M.

Preparation of a lithium-ion battery: A polyethylene (PE) with a thickness of 15 µm was selected as the separator. The positive electrode plate, the separator, and the negative electrode plate were stacked in sequence, and the stacked electrode plates and separator were wound to form a wound type electrode assembly, where the first zone is located at a single side zone in the innermost circle. The electrode assembly was placed into an outer packaging aluminum-plastic film, and the top edge and the side edge were sealed. Then, processes such as liquid injection and chemical conversion were performed to obtain a lithium-ion battery.

### Example 2

The difference from Example 1 was that: the thickness of the PET film was 20 µm.

### Example 3

The difference from Example 1 was that: the thickness of the PET film was 1 µm.

### Example 4

The difference from Example 1 was that: the thickness of the metal Al plating layer was 1 µm.

### Example 5

The difference from Example 2 was that: the thickness of the metal Al plating layer was 10 µm.

### Example 6

The difference from Example 1 was that: the thickness of the metal Al plating layer was 0.1 µm.

### Example 7

The difference from Example 1 was that: the material of the base layer was polyimide (PI).

### Example 8

The difference from Example 4 was that: the material of the base layer was polybutylene terephthalate (PBT).

### Example 9

The difference from Example 4 was that: the material of the metal plating layer was Ni.

### Example 10

The difference from Example 4 was that: the material of the metal plating layer was Cu.

### Example 11

The difference from Example 4 was that: the material of the first conductive layer was Al, and the material of the second conductive layer was Cu.

### Example 12

The difference from Example 4 was that: the porosity of the metal plating layer was 30%.

### Example 13

The difference from Example 4 was that: the porosity of the base layer was 30%.

### Example 14

The difference from Example 4 was that: a bonding layer was provided between the base layer and each of the metal plating layers on two sides, and the material of the bonding layer was polyurethane.

### Example 15

The difference from Example 4 was that: a bonding layer was provided between the base layer and each of the metal plating layers on two sides, and the material of the bonding layer was ethylene-vinyl acetate copolymer (EVA).

### Example 16

The difference from Example 4 was that: a bonding layer was provided between the base layer and the metal plating layer on one side, and the material of the bonding layer was polyurethane.

### Example 17

The difference from Example 4 was that: a bonding layer was provided between the base layer and each of the metal plating layers on two sides, and the material of the bonding layer was polyurethane on one side, and ethylene-vinyl alcohol copolymer (EVOH) on the other side.

### Example 18

The difference from Example 4 was that: before preparation of a positive electrode plate, a primer layer was prepared on the surface of the composite current collector by the following method: Conductive carbon black (Super P), and styrene-butadiene rubber (SBR) were mixed in a weight ratio of 97:3, and deionized water was added to prepare a slurry with a solid content of 0.85, and the slurry was well stirred. The slurry was applied evenly on surfaces of coated zones of the metal Al plating layer of the composite current collector, and dried at 110°C to obtain the primer layer.

### Example 19

The difference from Example 4 was that: a spacing of the pattern lines was arranged such that the resistance R1 between the first terminal and the second terminal that were connected to the first zone was 1.27 Ω.

### Example 20

The difference from Example 4 was that: a spacing of the pattern lines was arranged such that the resistance R1 between the first terminal and the second terminal that were connected to the first zone was 28.07 Ω.

### Example 21

The difference from Example 4 was that: a spacing of the pattern lines was arranged such that the resistance R1 between the first terminal and the second terminal that were connected to the first zone was 6.25 Ω.

### Example 22

The difference from Example 4 was that: a spacing of the pattern lines was arranged such that the resistance R1 between the first terminal and the second terminal that were connected to the first zone was 0.2 Ω.

### Example 23

The difference from Example 4 was that: no pattern was arranged in the first zone such that the resistance R1 between the first terminal and the second terminal that were connected to the first zone was 0.05 Ω.

### Example 24

The difference from Example 4 was that: the second conductive layer in the composite current collector opposite the first zone was removed.

### Example 25

The difference from Example 4 was that: the third zone was arranged in the second conductive layer, and no pattern was disposed in the third zone, where the resistance R2 between the third terminal and the fourth terminal that were connected to the third zone was 0.09 Ω.

### Example 26

The difference from Example 4 was that: the third zone was arranged in the second conductive layer, and the pattern in the third zone was different from that in the first zone, where the resistance R2 between the third terminal and the fourth terminal that were connected to the third zone was 1.24 Ω.

### Example 27

The difference from Example 4 was that: the composite current collector was used only in the negative electrode plate, and the material of the metal plating layer in the composite current collector was Cu.

### Example 28

The difference from Example 4 was that: the composite current collector was also used in the negative electrode, and the material of the metal plating layer in the composite current collector was Cu.

### Example 29

The difference from Example 4 was that: the first zone was located in the middle of the composite current collector in a length direction.

### Example 30

The difference from Example 4 was that: the first zone was located at a singled side zone in the outermost circle of a wound structure.

### Example 31

The difference from Example 4 was that: the first zone was located at a vacancy foil zone in the outermost circle of a wound structure.

### Example 32

The difference from Example 4 was that: the electrode assembly was in a laminated structure, and the first zone was located at an outermost single side zone of the electrode assembly.

### Example 33

The difference from Example 32 was that: the first zone was located in the middle of the electrode assembly.

### Example 34

The difference from Example 4 was that: one side of the composite current collector was a metal Cu plating layer, the other side was a metal Al plating layer, the first zone was arranged on the metal Al plating layer, an positive electrode active material layer was disposed on a coating zone of the metal Al plating layer, and an negative electrode active material layer was disposed on the metal Cu plating layer. The composite electrode plate and the separator were stacked and wound to form a wound electrode assembly.

### Comparative Example 1

The difference from Example 1 was that: a conventional Al current collector was used in the preparation of a positive electrode plate.

### Comparative Example 2

The difference from Comparative Example 1 was that: a heating sheet of Ni was disposed in the wound electrode assembly.

### Comparative Example 3

The difference from Comparative Example 1 was that: no first zone was arranged on the composite current collector, and a heating sheet of Ni was disposed in the wound type electrode assembly. Temperature rise test: When the lithium ion battery was heated with a power of 50 W from minus 10°C to 25°C at the highest temperature point of the battery surface, the maximum temperature difference (°C) on the battery surface was tested.

Nail penetration test: Ten lithium-ion batteries were taken for nail penetration test, and the battery passed the test if there was no fire or smoke. Nail penetration test pass rate = number of lithium-ion batteries that passed the test/10.

Drop test: Ten lithium-ion batteries ware taken for drop test and freely fell at a height of 1.5 m, and those lithium-ion batteries that have not failed passed the test. Drop test pass rate = number of lithium-ion batteries that passed the test/10.

Energy density test: In an environment at 25°C, the lithium-ion battery was charged from 3.0 V to 4.4 V at a charging rate of 1C, and then discharged to 3.0 V at a discharge rate of 0.1C, and the discharge capacity at 0.1C was measured. Discharge energy density at 0.1C = discharge capacity at 0.1C/volume of lithium-ion battery.

Cycle capacity retention rate: In an environment at 25°C, the lithium-ion battery was charged from 3.0 V to 4.4 V at a charging rate of 2C, then discharged to 3.0 V at a discharge rate of 0.2C. A discharge capacity in this case was determined as the initial discharge capacity. The foregoing charge-discharge cycle was repeated for 50 times, and the discharge capacity of the 50-th discharge was measured. Cycle capacity retention rate = 50-th discharge capacity/initial discharge capacity.

For compositions and performance test results of lithium-ion batteries prepared in Examples and Comparative Examples, refer to Table 1 and Table 2.

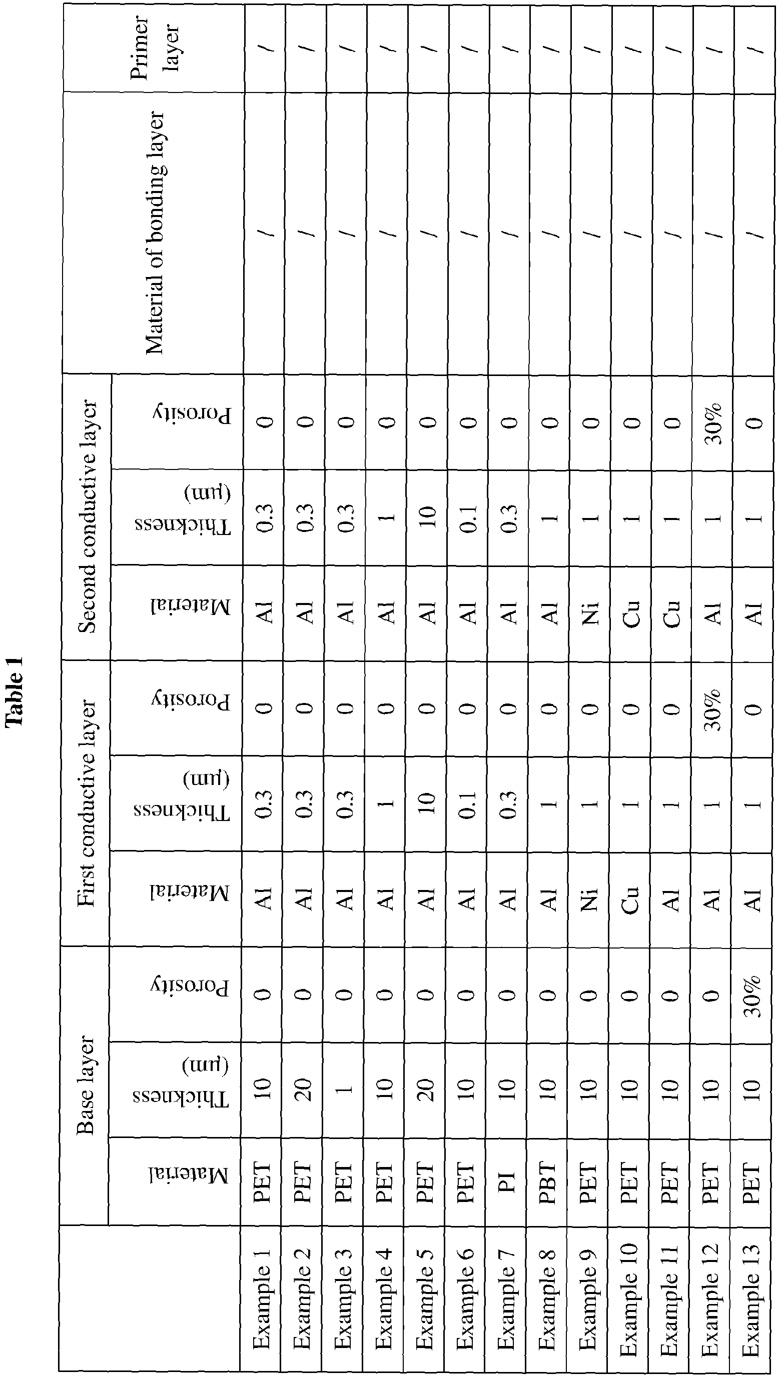

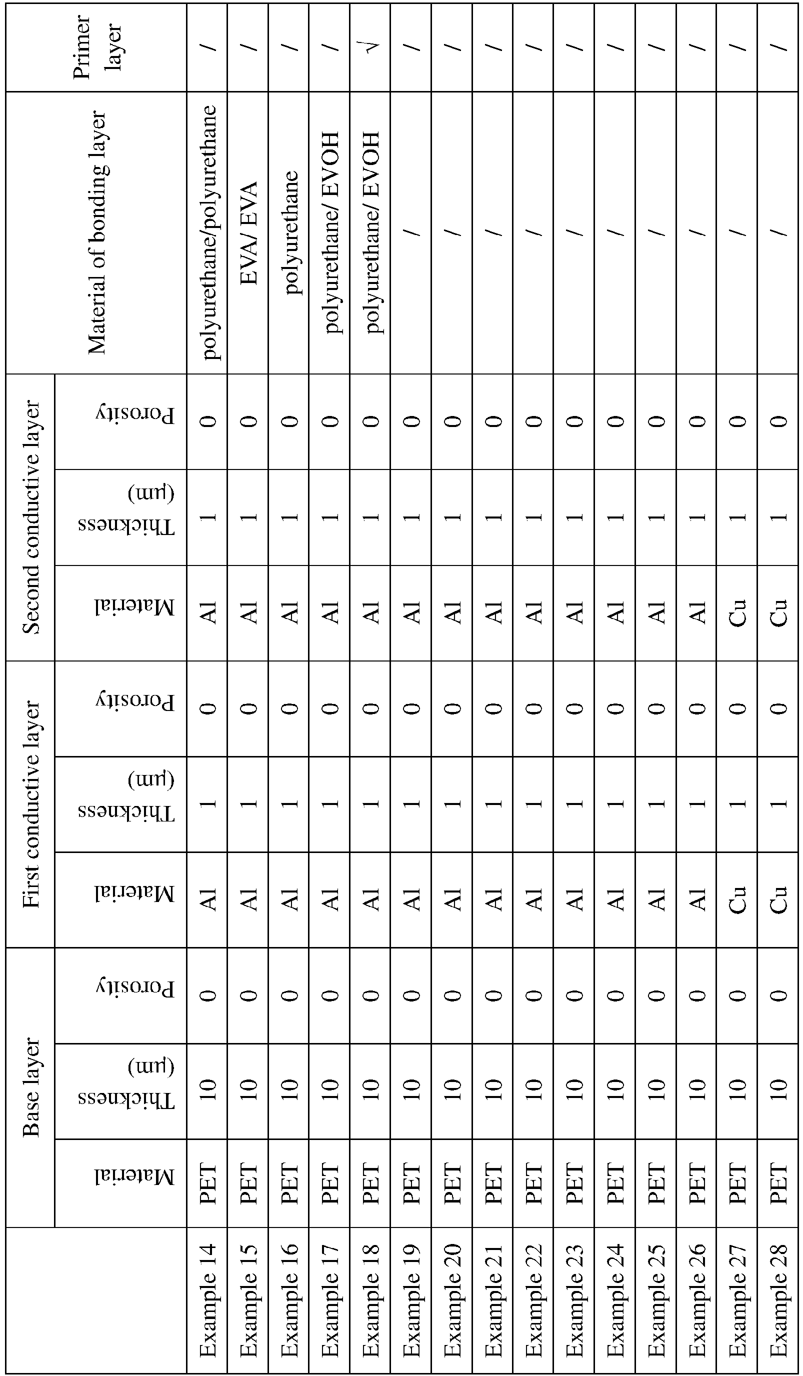

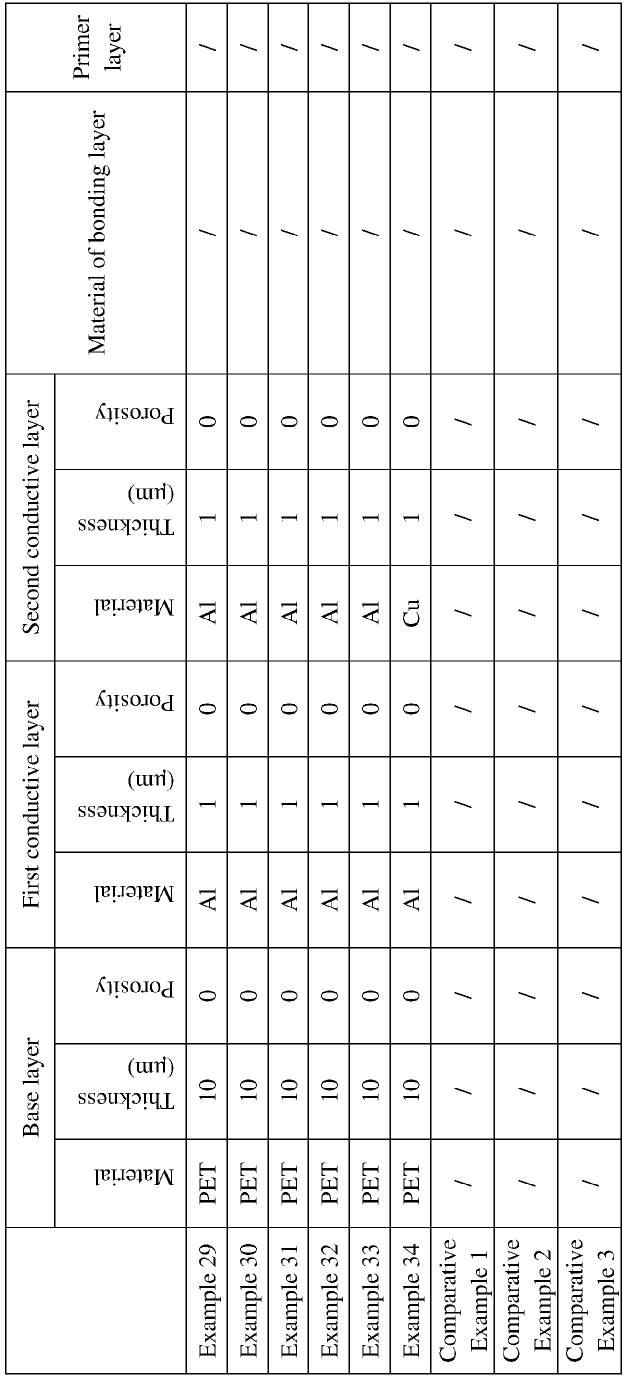

**Table 2**

| | R1 (Ω) | R2 (Ω) | R (Ω) | R1/R | Maximum temperature difference (°C) | Nail penetration test pass rate | Drop test pass rate | Energy density (Wh/L) | Cycle capacity retention rate |
|---|---|---|---|---|---|---|---|---|---|
| Example 1 | 1.14 | / | 0.047 | 24.26 | 9.1 | 10/10 | 10/10 | 624 | 86.10% |
| Example 2 | 1.15 | / | 0.047 | 24.47 | 10.4 | 10/10 | 10/10 | 598 | 86.10% |
| Example 3 | 1.18 | / | 0.048 | 24.58 | 8.3 | 8/10 | 9/10 | 650 | 86.20% |
| Example 4 | 1.21 | / | 0.046 | 26.30 | 8.4 | 10/10 | 10/10 | 626 | 86.30% |
| Example 5 | 1.19 | / | 0.043 | 27.67 | 7.2 | 7/10 | 8/10 | 598 | 86.40% |
| Example 6 | 1.22 | / | 0.266 | 4.59 | 11.6 | 10/10 | 10/10 | 626 | 85.30% |
| Example 7 | 1.21 | / | 0.046 | 26.30 | 8.3 | 10/10 | 10/10 | 626 | 86.20% |
| Example 8 | 1.21 | / | 0.046 | 26.30 | 8.4 | 10/10 | 10/10 | 626 | 86.20% |
| Example 9 | 1.21 | / | 0.053 | 22.83 | 8.5 | 10/10 | 10/10 | 626 | 86.20% |
| Example 10 | 1.21 | / | 0.044 | 27.50 | 8.2 | 10/10 | 10/10 | 626 | 86.10% |
| Example 11 | 1.21 | / | 0.044 | 27.50 | 8.3 | 10/10 | 10/10 | 626 | 86.20% |
| Example 12 | 1.21 | / | 0.051 | 23.92 | 8.7 | 10/10 | 10/10 | 626 | 86.30% |
| Example 13 | 1.21 | / | 0.046 | 26.30 | 8.4 | 10/10 | 10/10 | 626 | 86.30% |
| Example 14 | 1.26 | / | 0.045 | 28.00 | 8.4 | 10/10 | 10/10 | 626 | 86.40% |
| Example 15 | 1.26 | / | 0.045 | 28.00 | 8.5 | 10/10 | 10/10 | 626 | 86.40% |
| Example 16 | 1.20 | / | 0.046 | 26.09 | 8.4 | 10/10 | 10/10 | 626 | 86.40% |
| Example 17 | 1.22 | / | 0.045 | 27.11 | 8.4 | 10/10 | 10/10 | 626 | 86.40% |
| Example 18 | 1.22 | / | 0.045 | 27.11 | 8.1 | 10/10 | 10/10 | 626 | 86.60% |
| Example 19 | 1.27 | / | 0.043 | 29.53 | 8.3 | 10/10 | 10/10 | 626 | 86.30% |
| Example 20 | 28.07 | / | 0.045 | 623.78 | 8.4 | 10/10 | 10/10 | 626 | 86.30% |
| Example 21 | 6.25 | / | 0.045 | 138.89 | 8.4 | 10/10 | 10/10 | 626 | 86.30% |
| Example 22 | 0.2 | / | 0.045 | 4.44 | 8.4 | 10/10 | 10/10 | 626 | 86.30% |
| Example 23 | 0.05 | / | 0.046 | 1.09 | 8.3 | 10/10 | 10/10 | 626 | 86.30% |
| Example 24 | 1.26 | / | 0.045 | 28.00 | 8.4 | 10/10 | 10/10 | 626 | 86.30% |
| Example 25 | 1.21 | 0.09 | 0.045 | 26.89 | 8.3 | 10/10 | 10/10 | 626 | 86.30% |
| Example 26 | 1.21 | 1.24 | 0.046 | 26.30 | 8.4 | 10/10 | 10/10 | 626 | 86.30% |
| Example 27 | 1.25 | / | 0.043 | 29.07 | 8.3 | 10/10 | 10/10 | 626 | 86.30% |
| Example 28 | 1.27 | / | 0.046 | 27.61 | 6.6 | 10/10 | 10/10 | 626 | 86.30% |
| Example 29 | 1.24 | / | 0.046 | 26.96 | 9.7 | 10/10 | 10/10 | 626 | 86.30% |
| Example 30 | 1.28 | / | 0.046 | 27.83 | 11.4 | 10/10 | 10/10 | 625 | 86.30% |
| Example 31 | 1.27 | / | 0.046 | 27.61 | 11.6 | 10/10 | 10/10 | 626 | 86.30% |
| Example 32 | 1.11 | / | 0.031 | 35.81 | 11.5 | 10/10 | 10/10 | 631 | 86.30% |
| Example 33 | 1.13 | / | 0.032 | 35.31 | 8.7 | 10/10 | 10/10 | 630 | 86.30% |
| Example 34 | 1.28 | / | 0.047 | 27.23 | 8.4 | 10/10 | 10/10 | 637 | 86.30% |
| Comparative Example 1 | / | / | / | / | / | 0/10 | 0/10 | 626 | 86.40% |
| Comparative Example 2 | 1.23 | / | 0.043 | 28.60 | 13.4 | 0/10 | 0/10 | 613 | 84.10% |
| Comparative Example 3 | 1.26 | / | 0.048 | 26.25 | 14.2 | 3/10 | 5/10 | 611 | 83.40% |

As can be learned from Table 1 and Table 2 that compared with Comparative Examples 1 to 3, the lithium-ion batteries in Examples 1 to 34 improved the temperature rise performance, and can significantly improve the nail penetration and drop test safety performance of the lithium-ion battery. In addition, compared with the way of separately disposing heating sheets of Ni in the electrode assembly, by arranging a heating zone in the composite current collector, interface contact deterioration was improved, and therefore the cycle performance of the lithium-ion battery was improved. Moreover, by controlling the thicknesses of the base layer, the first conductive layer and the second conductive layer, the energy density of the lithium-ion battery can be further improved.

In the electrochemical apparatus and the electric device provided in this application, a heating zone is provided on the composite current collector to connect a heating circuit, the self-heating function of the electrochemical apparatus is realized, and a method to introduce a heating structure is optimized, thereby effectively alleviating problems caused by existing heating methods, such as energy density reduction, interface contact deterioration, serious self-discharge, and reliability risks in drop tests.

## Claims

1. An electrochemical apparatus, **characterized in that** the electrochemical apparatus comprises a first electrode plate, a first terminal, and a second terminal, wherein the first electrode plate comprises a composite current collector, and the composite current collector comprises:
a base layer, wherein the base layer has a first surface and a second surface that are opposite to each other;
a first conductive layer, wherein the first conductive layer is disposed on the first surface; and
a second conductive layer, wherein the second conductive layer is disposed on the second surface,
wherein the first conductive layer comprises a first zone and a second zone, and the first terminal and the second terminal are electrically connected to the first zone.

2. The electrochemical apparatus according to claim 1, **characterized in that** a first resistance R1 is provided between the first terminal and the second terminal, satisfying R1≥5 mΩ.

3. The electrochemical apparatus according to claim 2, **characterized in that** the electrochemical apparatus further comprises a positive tab and a negative tab, and an internal resistance R is provided between the positive tab and the negative tab, satisfying 0.05≤R1/R≤5000.

4. The electrochemical apparatus according to claim 1, **characterized in that** the second conductive layer comprises a third zone and a fourth zone, the electrochemical apparatus further comprises a third terminal and a fourth terminal, and the third terminal and the fourth terminal are electrically connected to the third zone; and
a second resistance R2 is provided between the third terminal and the fourth terminal, satisfying R2≥5 mΩ.

5. The electrochemical apparatus according to claim 1, **characterized in that** at least one of the following conditions is satisfied:
(i) the first zone is formed integrally by extending from the second zone;
(ii) the first zone is located at an end of the composite current collector in a length direction; and
(iii) the first zone comprises a pattern.

6. The electrochemical apparatus according to claim 4, **characterized in that** at least one of the following conditions is satisfied:
(iv) the third zone is formed integrally by extending from the fourth zone;
(v) the third zone is located at an end of the composite current collector in a length direction; and
(vi) the third zone comprises a pattern.

7. The electrochemical apparatus according to claim 4, **characterized in that** at least one of the following conditions is satisfied:
(a) materials of the first zone, the second zone, the third zone, or the fourth zone each independently comprise at least one of nickel, titanium, copper, silver, gold, platinum, iron, cobalt, chromium, tungsten, molybdenum, aluminum, magnesium, potassium, sodium, calcium, strontium, barium, silicon, germanium, antimony, lead, indium, or zinc;
(b) a porosity of the first conductive layer ranges from 0% to 60%, and a porosity of the second conductive layer ranges from 0% to 60%;
(c) a thickness of the first conductive layer ranges from 0.1 µm to 10 µm, and a thickness of the second conductive layer ranges from 0.1 µm to 10 µm;
(d) a material of the base layer comprises a polymer;
(e) a porosity of the base layer ranges from 0% to 50%;
(f) a thickness of the base layer ranges from 1 µm to 20 µm;
(g) the first electrode plate further comprises a first active material layer, and the first active material layer is disposed on a surface of the second zone; and
(h) the first electrode plate further comprises a second active material layer, and the second active material layer is disposed on a surface of the fourth zone.

8. The electrochemical apparatus according to claim 1, **characterized in that** at least one of the following conditions is satisfied:
(i) a bonding layer is provided between the base layer and the first conductive layer, and the bonding layer comprises a binder; and
(j) a bonding layer is provided between the base layer and the second conductive layer, and the bonding layer comprises a binder.

9. The electrochemical apparatus according to claim 8, **characterized in that** the bonding layer further comprises a conductive agent, and at least one of the following conditions is satisfied:
(k) the binder comprises at least one of polyamide, polyurethane, ethylene-vinyl acetate copolymer, ethylene-vinyl alcohol copolymer, acrylic acid ester polymer, sodium alginate, polyacrylic acid, polyvinyl alcohol, carboxymethyl chitosan, gelatin, polyvinylidene fluoride-hexafluoropropylene, polyvinylidene fluoride, polyacrylonitrile, polyphenylene ether, polypropylene carbonate, polyethylene oxide, silicone resin, ethylene acrylic acid copolymer, and their derivatives; and
(l) the conductive agent comprises at least one of carbon nanotubes, conductive carbon, or graphene.

10. An electrical device, comprising the electrochemical apparatus according to any one of claims 1 to 9.

11. The electric device according to claim 10, **characterized in that** the electric device further comprises a switch, and at least one of the following conditions is satisfied:
(1) the switch closes when a temperature of the electrochemical apparatus is lower than T1, so that a current passes through the first zone; and
(2) the switch closes when a temperature of the electrochemical apparatus is lower than T1, so that a current passes through the third zone.
